# EUROPEAN PATENT APPLICATION

(11) **EP 4 645 136 A1**
(43) Date of publication of application: **05.11.2025**
(21) Application number: 25154486.2
(22) Date of filing: 28.01.2025
(51) Int. Cl.: G06F 21/57

(54) **ACTIONABLE ARTIFICIAL INTELLIGENCE BOT FOR DATA SECURITY CORRELATIONS**

(30) Priority: 30.04.2024 US 202418650702
(71) Applicant: Cohesity, Inc., San Jose, CA 95110 (US)
(72) Inventor: VARANASI, Ravi, San Jose, 95110 (US); HARSOOR, Sharan, San Jose, 95110 (US)
(74) Representative: EIP

(57) **Abstract**

Techniques are described for techniques for an actionable artificial intelligence bot based on data security correlations. An example method comprises determining, by a data platform implemented by a computing system, a plurality of tags for a snapshot executed by the data platform, detecting, by the data platform, an indication of a security breach relating to the snapshot, processing, by the data platform and using a machine learning model, a plurality of attributes of the security breach and the plurality of tags to identify a potential compromise of the snapshot, processing, by the data platform and using a large language model, at least the plurality of attributes to generate an actionable prompt including a natural language description of at least one security response, and outputting, by the data platform, the actionable prompt.

## Description

### TECHNICAL FIELD

This disclosure relates to data platforms for computing systems.

### BACKGROUND

Data platforms that support computing applications rely on primary storage systems to support latency sensitive applications. However, because primary storage is often more difficult or expensive to scale, a secondary storage system is often relied upon to support secondary use cases such as backup and archive.

A file system snapshot is a point-in-time copy or representation of the entire file system or a specific subset of it. A snapshot captures the state of files and directories at a particular moment, providing a snapshot of the file system's data as it existed at that specific point. File system snapshots are often used for backup and recovery purposes and can offer benefits in terms of data protection and system consistency. The file system data can include file system's objects (e.g., files, directories), metadata, or both.

The data platform may provide security services that identify security breaches (e.g., ransomware, malware, intrusion detection, etc.) with respect to the file system. The data platform may execute multiple different microservices to support security breach identification and analysis. It may be difficult to summarize and explain the security breaches, making it difficult for end users to identify security risks due to the large number of security related microservices.

### SUMMARY

Examples of this disclosure describe techniques for an actionable artificial intelligence (AI) bot based on data security correlations. Rather than relying on isolated security features, such as ransomware detection, data classification, or support from security platforms such as CISCO^{®} XDR by Cisco Systems, Inc. and various data security posture management (DSPM) providers, a data platform may correlate information across security features and interact with users to implement a response (e.g., protective measures). In this manner, manual investigation through complex and differing user interfaces increases the efficiency of responses to security breaches.

For example, rather than resorting to keyword searches with respect to each of the multiple different security microservices in an attempt to respond to security breaches, a data platform may support execution of a bot that relies on artificial intelligence to correlate data from various security features and interact with users. In some examples, the AI bot may be trained with a general security knowledge base, a data platform security specific knowledge base (e.g., documentation regarding security services provided by the data platform), account-specific security knowledge base (e.g., logs and/or other data reflective of security breaches for a specific account associated with an end user), and other security adjacent knowledge bases. The AI bot (which may also be referred to as a "bot") may include a trained large language model (LLM), which may be trained with respect to such knowledge basis to interact with users regarding actions or potential actions that may be taken in response to a security breach.

The bot may execute on the data platform to correlate tags for one or more snapshots, such as to derive intents related to the snapshots. Based on the intents, the bot may determine whether the activity represents a security breach and, invoking the LLM of the bot, may communicate the same to a user using natural language. The user may interact with the bot using natural language (e.g., voice-to-text, text chat messages, etc.) to enter queries and commands to execute an action in response to the security breach. In some examples, the bot may always receive user input (e.g., approval, permission, or confirmation) prior to executing any actions to ensure no actions are taken without user approval.

The techniques of this disclosure may provide one or more technical advantages that realize one or more practical applications. By correlating data from various security features, uncertainties due to false positives and false negatives originating from individual security features may be avoided thereby providing an improved security response (e.g., a security response that specifically addresses the security breach, if any) through more comprehensive information. The correlation performed by the bot may remove a significant degree of complexity in providing security analysis for the data platform system wide and the bot and the user may more quickly understand, identify, and act upon security breaches for an underlying file system protected by the data platform, which may improve the user experience while also reducing an amount of computing resources (e.g., in terms of processing cycles, memory space, memory bus bandwidth, etc. along with power consumption) consumed due to the more efficient and natural response to queries that do not rely on complicated keyword searches specific to a given security microservice.

Although the techniques described in this disclosure may be described with respect to a snapshot function of a data platform, similar techniques may be applied for a backup or archive function or other similar workload of the data platform. In some examples, the techniques described herein may be used to provide a security response for application or other workloads including those related or unrelated to a snapshot, backup, or archive.

In one example, this disclosure describes a method comprising determining, by a data platform implemented by a computing system, a plurality of tags for a snapshot executed by the data platform; determining, by the data platform, a plurality of attributes of a security breach relating to the snapshot, wherein the plurality of tags and the plurality of attributes provide an indication of the security breach relating to the snapshot; processing, by the data platform and using one or more machine learning models, the plurality of attributes of the security breach and the plurality of tags to identify a potential compromise of the snapshot; processing, by the data platform and using the one or more machine learning models, at least the plurality of attributes to generate an actionable prompt including a natural language description of at least one security response; and outputting, by the data platform, the actionable prompt.

In another example, this disclosure describes a computing system comprising processing means configured to: determine a plurality of tags for a snapshot executed by the data platform; determine a plurality of attributes of a security breach relating to the snapshot, wherein the plurality of tags and the plurality of attributes provide an indication of the security breach relating to the snapshot; process, using one or more machine learning models, the plurality of attributes of the security breach and the plurality of tags to identify a potential compromise of the snapshot; process, using the one or more machine learning models, at least the plurality of attributes to generate an actionable prompt including a natural language description of at least one security response; and output the actionable prompt.

In another example, this disclosure describes a computer-readable storage medium comprising instructions that, when executed, cause one or more processors of a computing system to determine a plurality of tags for a snapshot executed by the data platform; determine a plurality of attributes of a security breach relating to the snapshot, wherein the plurality of tags and the plurality of attributes provide an indication of the security breach relating to the snapshot; process, using one or more machine learning models, the plurality of attributes of the security breach and the plurality of tags to identify a potential compromise of the snapshot; process, using the one or more machine learning models, at least the plurality of attributes to generate an actionable prompt including a natural language description of at least one security response; and output the actionable prompt.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

FIGS. 1A-1B are block diagrams illustrating example systems configured to support execution of an actionable artificial intelligence bot based on data security correlations, in accordance with techniques of this disclosure.
FIG. 2 is a block diagram illustrating an example system configured to support execution of an actionable artificial intelligence bot based on data security correlations, in accordance with techniques of this disclosure.
FIG. 3 is a block diagram illustrating an example system configured to support execution of an actionable artificial intelligence bot based on data security correlations, in accordance with techniques of this disclosure.
FIG. 4 isa flowchart illustrating example operation of a data platform in performing various aspects of an actionable artificial intelligence bot based on data security correlations, in accordance with techniques of this disclosure.
FIG. 5 is a flowchart illustrating example operation of a data platform in performing various aspects of an actionable artificial intelligence bot based on data security correlations, in accordance with techniques of this disclosure.

Like reference characters denote like elements throughout the text and figures.

### DETAILED DESCRIPTION

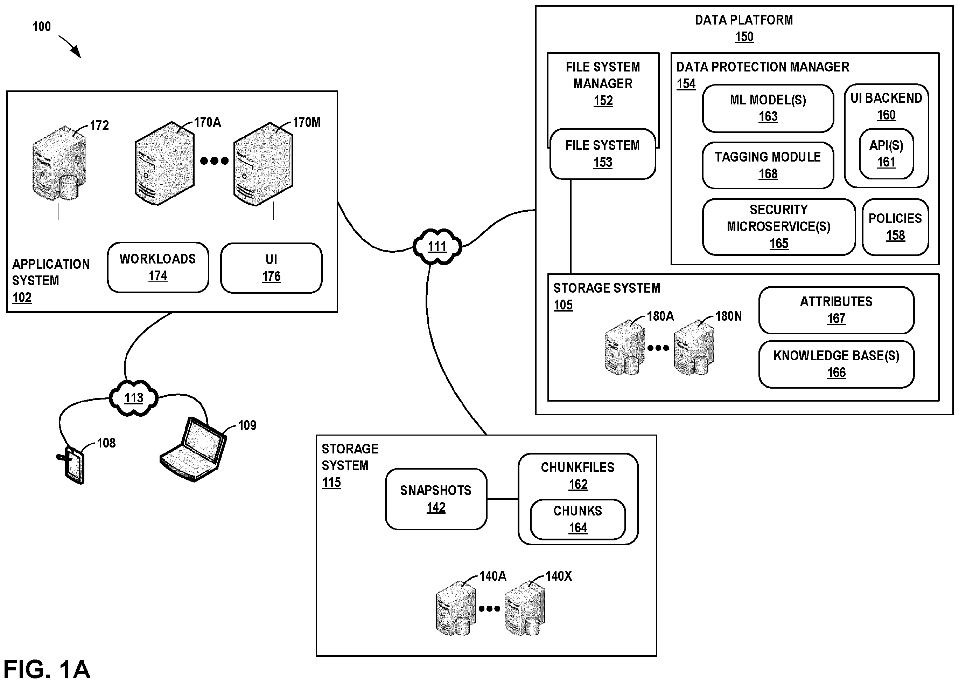

FIGS. 1A-1B are block diagrams illustrating example systems configured to support execution of an actionable artificial intelligence bot based on data security correlations, in accordance with one or more examples of the techniques described in this disclosure. In the example of FIG. 1A, system 100 includes application system 102. Application system 102 represents a collection of hardware devices, software components, and/or data stores that can be used to implement one or more applications or services provided to one or more mobile devices 108 and one or more client devices 109 via a network 113. Application system 102 may include one or more physical or virtual computing devices that execute workloads 174 for the applications or services. Workloads 174 may include one or more virtual machines, containers, Kubernetes pods each including one or more containers, bare metal processes, and/or other types of workloads.

In the example of FIG. 1A, application system 102 includes application servers 170A-170M (collectively, "application servers 170") connected via a network with database server 172 implementing a database. Other examples of application system 102 may include one or more load balancers, web servers, network devices such as switches or gateways, or other devices for implementing and delivering one or more applications or services to mobile devices 108 and client devices 109. Application system 102 may include one or more file servers. The one or more file servers may implement a primary file system for application system 102. (In such instances, file system 153 may be a secondary file system that provides backup, archive, and/or other services for the primary file system. Reference herein to a file system may include a primary file system or secondary file system, e.g., a primary file system for application system 102 or file system 153 operating as either a primary file system or a secondary file system.)

Application system 102 may be located on premises and/or in one or more data centers, with each data center a part of a public, private, or hybrid cloud. The applications or services may be distributed applications. The applications or services may support enterprise software, financial software, office or other productivity software, data analysis software, end user relationship management, web services, educational software, database software, multimedia software, information technology, health care software, or other type of applications or services. The applications or services may be provided as a service (-aaS) for Software-aaS (SaaS), Platform-aaS (PaaS), Infrastructure-aaS (IaaS), Data Storage-aas (dSaaS), or other type of service.

In some examples, application system 102 may represent an enterprise system that includes one or more workstations in the form of desktop computers, laptop computers, mobile devices, enterprise servers, network devices, and other hardware to support enterprise applications. Enterprise applications may include enterprise software, financial software, office or other productivity software, data analysis software, end user relationship management, web services, educational software, database software, multimedia software, information technology, health care software, or other type of applications. Enterprise applications may be delivered as a service from external cloud service providers or other providers, executed natively on application system 102, or both.

In the example of FIG. 1A, system 100 includes a data platform 150 that provides a file system 153 and backup or archival functions to an application system 102, using storage system 105 and separate storage system 115. Data platform 150 implements a distributed file system 153 and a storage architecture to facilitate access by application system 102 to file system data and to facilitate the transfer of data between storage system 105 and application system 102 via network 111. With the distributed file system, data platform 150 enables devices of application system 102 to access file system data, via network 111 using a communication protocol, as if such file system data was stored locally (e.g., to a hard disk of a device of application system 102). Example communication protocols for accessing files and objects include Server Message Block (SMB), Network File System (NFS), or AMAZON^{®} Simple Storage Service (S3^{®}). File system 153 may be a primary file system or secondary file system for application system 102.

File system manager 152 represents a collection of hardware devices and software components that implements file system 153 for data platform 150. Examples of file system functions provided by the file system manager 152 include storage space management including deduplication, file naming, directory management, metadata management, partitioning, and access control. File system manager 152 executes a communication protocol to facilitate access via network 111 by application system 102 to files and objects stored to storage system 105.

Data platform 150 includes storage system 105 having one or more storage devices 180A-180N (collectively, "storage devices 180"). Storage devices 180 may represent one or more physical or virtual compute and/or storage devices that include or otherwise have access to storage media. Such storage media may include one or more of Flash drives, solid state drives (SSDs), hard disk drives (HDDs), forms of electrically programmable memories (EPROM) or electrically erasable and programmable (EEPROM) memories, and/or other types of storage media used to support data platform 150. Different storage devices of storage devices 180 may have a different mix of types of storage media. Each of storage devices 180 may include system memory. Each of storage devices 180 may be a storage server, a network-attached storage (NAS) device, or may represent disk storage for a compute device. Storage system 105 may be a redundant array of independent disks (RAID) system. In some examples, one or more of storage devices 180 are both compute and storage devices that execute software for data platform 150, such as file system manager 152 and data protection manager 154 in the example of system 100. In some examples, separate compute devices (not shown) execute software for data platform 150, such as file system manager 152 and data protection manager 154 in the example of system 100. Each of storage devices 180 may be considered and referred to as a "storage node" or simply as a "node". Storage devices 180 may represent virtual machines running on a supported hypervisor, a cloud virtual machine, a physical rack server, or a compute model installed in a converged platform.

In various examples, data platform 150 may run on physical systems, virtually, or natively in the cloud. For instance, data platform 150 may be deployed as a physical cluster, a virtual cluster, or a cloud-based cluster running in a private, hybrid private/public, or public cloud deployed by a cloud service provider. In some examples of system 100, multiple instances of data platform 150 may be deployed, and file system 153 may be replicated among the various instances. In some cases, data platform 150 may be a compute cluster that represents a single management domain. The number of storage devices 180 may be scaled to meet performance needs.

Data platform 150 may implement and offer multiple storage domains to one or more tenants or to segregate workloads 174 that require different data policies. A storage domain may be a data policy domain that determines policies for deduplication, compression, encryption, tiering, and other operations performed with respect to objects stored using the storage domain. In this way, data platform 150 may offer users the flexibility to choose global data policies or workload specific data policies. Data platform 150 may support partitioning.

A view may be a protocol export that resides within a storage domain. A view may inherit data policies from its storage domain, though additional data policies may be specified for the view. Views can be exported via SMB, NFS, S3, and/or another communication protocol. Policies that determine data processing and storage by data platform 150 may be assigned at the view level. A protection policy may specify a backup frequency and a retention policy, which may include a data lock period. Snapshots 142 or archives created in accordance with a protection policy inherit the data lock period and retention period specified by the protection policy.

Each of network 113 and network 111 may be the internet or may include or represent any public or private communications network or other network. For instance, network 113 may be a cellular, Wi-Fi^{®}, ZigBee^{®}, Bluetooth^{®}, Near-Field Communication (NFC), satellite, enterprise, service provider, and/or other type of network enabling transfer of data between computing systems, servers, computing devices, and/or storage devices. One or more of such devices may transmit and receive data, commands, control signals, and/or other information across network 113 or network 111 using any suitable communication techniques. Each of network 111 or network 113 may include one or more network hubs, network switches, network routers, satellite dishes, or any other network equipment. Such network devices or components may be operatively inter-coupled, thereby providing for the exchange of information between computers, devices, or other components (e.g., between one or more client devices or systems and one or more computer/server/storage devices or systems). Each of the devices or systems illustrated in FIGS. 1A-1B may be operatively coupled to network 111 and/or network 113 using one or more network links. The links coupling such devices or systems to network 111 and/or network 113 may be Ethernet, Asynchronous Transfer Mode (ATM) or other types of network connections, and such connections may be wireless and/or wired connections. One or more of the devices or systems illustrated in FIGS. 1A-1B or otherwise on network 111 and/or network 113 may be in a local location and/or a remote location relative to one or more other illustrated devices or systems.

Application system 102, using file system 152 provided by data platform 150, may generate objects and other data that file system manager 152 may create, manage, and cause to be stored to storage system 105. For this reason, application system 102 may alternatively be referred to as a "source system," and file system 153 for application system 102 may alternatively be referred to as a "source file system." Application system 102 may for some purposes communicate directly with storage system 105 via network 111 to transfer objects, and for some purposes communicate with file system manager 152 via network 111 to obtain objects or metadata indirectly from storage system 105. File system manager 152 generates and stores metadata to storage system 105. The collection of data stored to storage system 105 and used to implement file system 153 is referred to herein as file system data. File system data may include the aforementioned metadata and objects. Metadata may include file system objects, tables, trees, or other data structures; metadata generated to support deduplication; or metadata to support snapshots. As shown in the example of FIG. 1A for instance, storage system 105 may store metadata for file system 153 in a tree data structure. Objects that are stored may include files, virtual machines, databases, applications, pods, container, any of workloads 174, system images, directory information, or other types of objects used by application system 102. Objects of different types and objects of a same type may be deduplicated with respect to one another.

Data platform 150 includes data protection manager 154 that provides backups of file system data for file system 153. In the example of system 100, data protection manager 154 stores one or more backups, archives, or snapshots 142 of file system data, stored by storage system 105, to storage system 115 via network 111.

Storage system 115 includes one or more storage devices 140A-140X (collectively, "storage devices 140"). Storage devices 140 may represent one or more physical or virtual compute and/or storage devices that include or otherwise have access to storage media. Such storage media may include one or more of Flash drives, solid state drives (SSDs), hard disk drives (HDDs), optical discs, forms of electrically programmable memories (EPROM) or electrically erasable and programmable (EEPROM) memories, and/or other types of storage media. Different storage devices of storage devices 140 may have a different mix of types of storage media. Each of storage devices 140 may include system memory. Each of storage devices 140 may be a storage server, a network-attached storage (NAS) device, or may represent disk storage for a compute device. Storage system 115 may include redundant array of independent disks (RAID) system. Storage system 115 may be capable of storing much larger amounts of data than storage system 105. Storage devices 140 may further be configured for long-term storage of information more suitable for archival purposes.

In some examples, storage system 105 and/or 115 may be a storage system deployed and managed by a cloud storage provider and referred to as a "cloud storage system." Example cloud storage providers include, e.g., AMAZON WEB SERVICES (AWS^{™}) by AMAZON, INC., AZURE^{®} by MICROSOFT, INC., DROPBOX^{™} by DROPBOX, INC., ORACLE CLOUD^{™} by ORACLE, INC., and GOOGLE CLOUD PLATFORM (GCP) by GOOGLE, INC. In some examples, storage system 115 is co-located with storage system 105 in a data center, on-prem, or in a private, public, or hybrid private/public cloud. Storage system 115 may be considered a "backup" or "secondary" storage system for primary storage system 105. Storage system 115 may be referred to as an "external target" for snapshots 142. Where deployed and managed by a cloud storage provider, storage system 115 may be referred to as "cloud storage." Storage system 115 may include one or more interfaces for managing transfer of data between storage system 105 and storage system 115 and/or between application system 102 and storage system 115. Data platform 150 that supports application system 102 relies on primary storage system 105 to support latency sensitive applications. However, because storage system 105 is often more difficult or expensive to scale, data platform 150 may use secondary storage system 115 to support secondary use cases such as backup, snapshot, and archive. In general, a file system backup or snapshot 142 is a copy of file system 153 to support protection of file system 153 for quick recovery, often due to some data loss in file system 153, and a file system archive ("archive") is a copy of file system 153 to support longer term retention and review. The "copy" of file system 153 may include such data as is needed to restore or view file system 153 in its state at the time of the backup or archive.

Data protection manager 154 may backup file system data for file system 153 at any time in accordance with backup policies 158 that specify, for example, backup periodicity and timing (daily, weekly, etc.), which file system data is to be backed up, a backup retention period, storage location, access control, and so forth. An initial backup of file system data may correspond to a state of the file system data at an initial backup time (the backup creation time of the initial backup). The initial backup may include a full backup of the file system data or may include less than a full backup of the file system data, in accordance with backup policies. For example, the initial backup may include all objects of file system 153 or one or more selected objects of file system 153.

One or more subsequent incremental backups of the file system 153 may correspond to respective states of the file system 153 at respective subsequent backup creation times, i.e., after the backup creation time corresponding to the initial backup. A subsequent backup may include an incremental backup of file system 153. A subsequent backup may correspond to an incremental backup of one or more objects of file system 153. Some of the file system data for file system 153 stored on storage system 105 at the initial backup creation time may also be stored on storage system 105 at the subsequent backup creation times. A subsequent incremental backup may include data that was not previously stored in a backup at storage system 115. File system data that is included in a subsequent backup may be deduplicated by data protection manager 154 against file system data that is included in one or more previous backups, including the initial backup, to reduce the amount of storage used. (Reference to a "time" in this disclosure may refer to dates and/or times. Times may be associated with dates. Multiple backups may occur at different times on the same date, for instance.)

In system 100, data protection manager 154 stores backups of file system data to storage system 115 as snapshots 142, using chunkfiles 162. Data protection manager 154 may use any of snapshots 142 to subsequently restore the file system (or portion thereof) to its state at the snapshot creation time, or the snapshot may be used to create or present a new file system (or "view") based on the snapshot, for instance. As noted above, data protection manager 154 may deduplicate file system data included in a subsequent snapshot against file system data that is included in one or more previous snapshots. For example, a second object of file system 153 included in a second snapshot may be deduplicated against a first object of file system 153 and included in a first, earlier snapshot. Data protection manager 154 may remove a data chunk ("chunk") of the second object and generate metadata with a reference (e.g., a pointer) to a stored chunk of chunks 164 in one of chunkfiles 162. The stored chunk in this example is an instance of a chunk stored for the first object.

Data protection manager 154 may apply deduplication as part of a write process of writing (i.e., storing) an object of file system 153 to one of snapshots 142 in storage system 115. Deduplication may be implemented in various ways. For example, the approach may be fixed length or variable length, the block size for the file system may be fixed or variable, and deduplication domains may be applied globally or by workload. Fixed length deduplication involves delimiting data streams at fixed intervals. Variable length deduplication involves delimiting data streams at variable intervals to improve the ability to match data, regardless of the file system block size approach being used. This algorithm is more complex than a fixed length deduplication algorithm but can be more effective for most situations and generally produces less metadata. Variable length deduplication may include variable length, sliding window deduplication. The length of any deduplication operation (whether fixed length or variable length) determines the size of the chunk being deduplicated.

In some examples, the chunk size can be within a fixed range for variable length deduplication. For instance, data protection manager 154 can compute chunks having chunk sizes within the range of 16-48 kB. Data protection manager 154 may eschew deduplication for objects that that are less than 16 kB. In some example implementations, when data of an object is being considered for deduplication, data protection manager 154 compares a chunk identifier (ID) (e.g., a hash value of the entire chunk) of the data to existing chunk IDs for already stored chunks. If a match is found, data protection manager 154 updates metadata for the object to point to the matching, already stored chunk. If no matching chunk is found, data protection manager 154 writes the data of the object to storage as one of chunks 164 for one of chunkfiles 162. Data protection manager 154 additionally stores the chunk ID in chunk metadata, in association with the new stored chunk, to allow for future deduplication against the new stored chunk. In general, chunk metadata is usable for generating, viewing, retrieving, or restoring objects stored as chunks 164 (and references thereto) within chunkfiles 162, for any of snapshots 142, and is described in further detail below.

Each of chunkfiles 162 includes multiple chunks 164. Chunkfiles 162 may be fixed size (e.g., 8 MB) or variable size. Chunkfiles 162 may be stored co-located with snapshot metadata, such as a tree data structure. In some cases, chunkfiles 162 may be stored using a data structure offered by a cloud storage provider for storage system 115. For example, each of chunkfiles 162 may be one of an S3 object within an AWS cloud bucket, an object within AZURE Blob Storage, an object in Object Storage for ORACLE CLOUD, or other similar data structure used within another cloud storage provider storage system.

The process of deduplication for multiple objects over multiple snapshots results in chunkfiles 162 that each have multiple chunks 164 for multiple different objects associated with the multiple snapshots. In some examples, different snapshots 142 may have objects that are effectively copies of the same data, e.g., for an object of the file system that has not been modified. An object of a snapshot may be represented or "stored" as metadata having references to chunks that enable the object to be accessed. Accordingly, description herein to a snapshot 142 "storing," "having," or "including" an object includes instances in which the snapshot does not store the data for the object in its native form.

An end user or application associated with application system 102 may have access (e.g., read or write) to data that is stored in storage system 115. The end user or application may delete some of the data due to a malicious attack (e.g., virus, ransomware, etc.), a rogue or malicious administrator, and/or human error. The user's credentials may be compromised and as a result, the data that is stored in storage system 115 may be subject to ransomware. To reduce the likelihood of accidental or malicious data deletion or corruption, a data lock having a data lock period may be applied to a snapshot.

As described above, chunkfiles 162 may represent an object in a snapshot storage system (shown as "storage system 115," which may also be referred to as "snapshot storage system 115") that conform to an underlying architecture of snapshot storage system 115. Data platform 150 includes data protection manager 154 that supports archiving of data in the form of chunkfiles 162, which interface with snapshot storage system 115 to store chunkfiles 162 after forming chunkfiles 162 from one or more chunks 164 of data. Data protection manager 154 may apply a process referred to as "deduplication" with respect to chunks 164 to remove redundant chunks and generate metadata linking redundant chunks to previously stored chunks 164 and thereby reduce storage consumed (and thereby reduce storage costs in terms of storage required to store the chunks).

In accordance with various examples of the techniques described in this disclosure, data platform 150 may support execution of an AI "bot" that may rely on one or more machine learning (ML) models 163 ("ML models 163") (e.g., decision tree, clustering, linear regression, Naive Bayes, k nearest neighbors (kNN)). ML models 163 may be trained with respect to various knowledge bases 166, including a general security knowledge base, a data platform security specific knowledge base (e.g., documentation regarding security services provided by the data platform), account-specific security knowledge base (e.g., logs and/or other data reflective of security breaches for a specific account associated with an end user), and other security adjacent knowledge bases. The security knowledge bases may include user or other actions at network, compute, or other electronic system and identifications of security breaches that, when used to train ML model 163, allow ML model 163 to derive intents (e.g., an intent to cause a security breach or compromise snapshot 142 at data platform 150) based on user or other activity currently being monitored and/or security analysis output from security microservices 165 ("microservices 165") at data platform 150. As described herein, the bot may be implemented in data platform 150 in the form of data protection manager 154 and may be referred to as data protection manager 154.

Data protection manager 154 may include ML model 163 in the form of a large language model (LLM) that may reference one or more knowledge bases 166 in various ways to obtain security data (either general, specific, and/or account-specific) that may form the basis of a natural language alert or other message, summary, explanation, or description of a security breaches for the user and natural language responses to natural language input entered by the end user. In some examples, data protection manager 154 may apply the LLM (which is an example of ML models 163 and may be referred to as "LLM 163") to interact with the user to prompt the user for input, such as to confirm an action (e.g., approve a security response) data protection manager 154 has determined to take, using a natural language description of the action. The prompt is an "actionable prompt" in that data protection manager 154 may perform the action in response to confirmation (e.g., user input approving the action) from the user. In some examples, data protection manager 154 may receive user input (e.g., approval, permission, or confirmation) prior to executing any actions to ensure no actions are taken without user approval.

The user may interact with data protection manager 154 via user interface (UI) 176 ("UI 176") using natural language (e.g., voice-to-text, text chat messages, etc.) to enter queries, commands, and other input, which data protection manager 154, such as using LLM 163, may process to derive intents. Based on the intents, data protection manager 154 may perform one or more security responses or retrieve security data from the general security knowledge base, the data platform specific knowledge base, the account-specific security knowledge base, and/or other security adjacent knowledge bases (shown as knowledge bases 166). Data protection manager 154 may invoke LLM 163, providing derived intents, monitored actions, security analysis outputs from microservices 165, the security data retrieved from various knowledge bases 166, or various subsets thereof. LLM 163 may formulate, based on such input, a natural language response. UI backend 160 executed by data platform 150 may then output the natural language response (from LLM 163) to UI 176 executed locally at the remote end user system (shown as application system 102). UI backend 160 may provide one or more APIs 161 and UI 176 may make API calls (e.g., requests) to UI backend 160 to allow a user to interact with data platform using natural language.

Data protection manager 154 may improve the data security posture of data platform 150 significantly, such as by providing greater confidence regarding security responses to security breaches. In some examples, an indication of a security breach may be unconfirmed (e.g., be a potential security breach) and, as such, data protection manager 154 may confirm the security breach is an actual security breach prior to performing particular actions (e.g., security responses). For example, data protection manager 154 may determine to a particular confidence level (e.g., 90%) that a security breach has occurred (e.g., snapshot 142 has been compromised) to confirm the security breach. Data protection manager 154 may continuously monitor activity for security breaches or discrepancies across snapshots or workloads. In some examples, data protection manager 154 may prevent security breaches from impacting file system 153 (e.g., especially in the form of ransomware, which may lock files stored to snapshots 142 that prevent successful restores of snapshots 142).

Data protection manager 154 may correlate and scrutinize security data from a variety of sources, including ransomware detection systems, threat-hunting mechanisms, data classification frameworks, CISCO^{®} XDR, and diverse DSPM vendor insights. Data platform 150 may, in some examples, implement the security data sources in the form of microservices 165. For example, ransomware detection systems, threat-hunting mechanisms, data classification frameworks, CISCO^{®} XDR, and diverse DSPM vendor insights may each be implemented with a microservice 165 executed on data platform 150. Microservices 165 may analyze snapshots 142 or other workloads to identify security breaches, including one or more of a ransomware attack, a malware attack, an unauthorized data access, or a presence of malicious code. Though shown as part of data protection manager 154, in some examples, microservices 165 may reside (e.g., be stored) and execute at storage system 105, such as on one or more storage devices 180 thereof.

In some examples, microservices 165 may each provide a dedicated security analysis function that outputs attributes 167 of security breaches identified by the respective one of microservices 165. The attributes 167 of a security breach may identify a type or characteristic of the security breach (e.g., ransomware, virus, malware, data wiping, or other threats, abnormal access to sensitive/confidential or other data, and privilege escalation). In some examples, the attributes 167 may include indications of user or other actions at network, compute, or other electronic system and indicate targets of such actions (e.g., the file system 153, snapshot 142, or other workload affected by the actions). Data protection manager 154 may process the attributes 167, such as through a data security ML model of ML models 163 (which is an example of ML models 163 and may be referred to as "data security model 163") to detect a security breach (or potential security breach), a compromise (or a potential compromise) of a snapshot 142 or workload, or both. Data security model 163 may be trained to detect a security breach or a compromise with respect to various knowledge bases 166, including a general security knowledge base, a data platform security specific knowledge base (e.g., documentation regarding security services provided by the data platform), account-specific security knowledge base (e.g., logs and/or other data reflective of security breaches for a specific account associated with an end user), and other security adjacent knowledge bases. For example, data security model 163, in response to receiving an indication of a security breach, may determine whether snapshot 142 has been compromised, as will be described further below. Some examples of security breaches or compromises of snapshots 142 include unauthorized or undesired access, changes, deletion, encryption, or exfiltration of at least a portion of snapshots 142. In some examples, data security model 163 may be an LLM, including LLM 163 of ML models 163 described herein.

As will be described further below, data protection manager 154 may detect security breaches in various ways. When a security breach is detected data protection manager 154 may, such as within an alert threshold (e.g., 10ms), alert the user through a user-friendly (e.g., natural language) UI 176 or UI backend 160. For example, LLM 163 may generate an alert or other message indicating a security breach, when data protection manager 154 detects an indication of a security breach, which includes attempted or potential security breaches. Data protection manager 154 may include one or more suggested actions (e.g., security responses), such as through LLM 163, UI backend 160, and UI 176, for the user to confirm or, in some cases, may describe one or more actions data protection manager 154 has already taken as a security response. Data protection manager 154 may continue to gather additional information from other security features, such as by executing one or more of microservices 165, possibly ensuring a comprehensive analysis.

Data protection manager 154 may include a tagging module 168 that categorizes snapshots 142 with one or more tags, such as by assigning one or more tags to snapshot 142 or various portions (e.g., objects) of snapshots 142. In some examples, a tag may comprise an indication of compromise (IOC), an indication of sensitive data, and an indication of DSPM vendor evaluations. The tags may provide data protection manager 154, such as data security model 163 of ML models 163, with a preliminary overview of snapshots 142, enabling data protection manager 154 to make informed decisions (e.g., derive intents, determine/confirm compromise of a snapshot/workload, suggest security responses, or execute security responses) promptly. For example, a tag indicating sensitive data or a compromise may cause data security model 163 to be more likely to suggest a security response that restricts or blocks an incremental or other backup of snapshots 142 as compared to a DSPM evaluation tag which may cause data security model 163 to suggest a security response including further analyses.

Tagging module 168 may tag snapshots 142 in various ways, which may include combinations of various tagging techniques. For example, tagging module 168 may tag objects within snapshots 142 based on the source of the data contained in the objects. For example, objects created by particular departments (e.g., finance, payroll, legal) may be tagged as sensitive data. Tagging module 168 may tag objects based on input from microservices 165, such as indication of compromise (IOC), an indication of sensitive data, and an indication of DSPM vendor evaluations received from data protection manager 154 executing one or more microservices 165. In some examples, tagging module 168 may include a classifier, which may be a ML model of ML models 163, that classifies various portions (e.g., objects) of snapshots 142 into one or more classifications assigned to one or more tags. Tagging module 168 may assign tags to objects of snapshots 142 based on the determined classification of the respective objections.

In some examples, data protection manager 154 may not solely rely on tags assigned by tagging module 168. In some cases, data protection manager 154 may determine to perform a deeper or additional analysis/review to ensure security integrity and proactively recommend further actions to the user in an interactive manner, such as in natural language through LLM 163. For example, after detecting an indication of a security breach, data protection manager 154, such as through data security model 163, may determine to perform a deeper analysis/review when data security model 163 cannot achieve a threshold confidence level for confirming that snapshot 142 has been compromised. In such case, rather than acting upon (e.g., performing a security response) a potential false positive indication of a security breach, data protection manager 154 may execute one or more of microservices 165 to obtain additional attributes 167 for the security breach. Data protection manager 154 may include interactive capability, such as through LLM 163, that presents suggested security responses and receives user input to confirm the execution of the suggested security response(s). Upon receipt of a user confirmation, data protection manager 154 may execute the suggested security response(s).

For example, in a scenario where ransomware may exist on a workload, such as snapshot 142, data protection manager 154 may retrieve additional insights/information (e.g., attributes 167 of the ransomware security breach) from various security features, such as one or more of microservices 165. If the available data is insufficient for a definitive conclusion as to whether the workload has been compromised, data protection manager 154 may suggest a security response including further analyses, such as a threat scan or data classification by their respective microservices 165, to possibly improve confidence at least to an acceptable threshold confidence level to output an indication that the workload has been compromised.

As described above, data protection manager 154 may, in some examples, suggest particular security responses rather than automatically performing the security responses without user approval. For example, data platform 150 may require significant compute, bandwidth, or other resources to perform a security response such as a threat scan or data classification microservice 165 and, as such, data protection manager 154 may suggest and require user confirmation before performing such security responses. In some cases, a security response may be disruptive to users, such as when the security response blocks or restricts creation of an incremental or other backup of a workload or snapshot 142, and therefore may require user confirmation before data protection manager 154 performs the security response. With the user's approval, data protection manager 154 may execute suggested security response(s), including additional assessments, potentially providing a well-rounded view of the security status. Data protection manager 154 may, such as through LLM 163, present its findings to the user (e.g., a summary of the security breach), present a suggested security response (e.g., request permission to block the recovery of the compromised workload or to perform further analyses) or suggest alternative measures, all in natural language.

As can be seen, data protection manager 154 may collect and correlate security data (e.g., attributes 167 for a security breach) from various sources and provide a dynamic and interactive process to help ensure a rapid security response to security threats and also empower users by involving the users in the decision-making and security response process, thereby enhancing security measures and responses without the need for manual intervention by the users. In this manner, data protection manager 154 provides an improvement in security management at least for the reason that data protection manager 154 leverages integrated data analysis and user interaction to fortify defenses against security breaches more effectively.

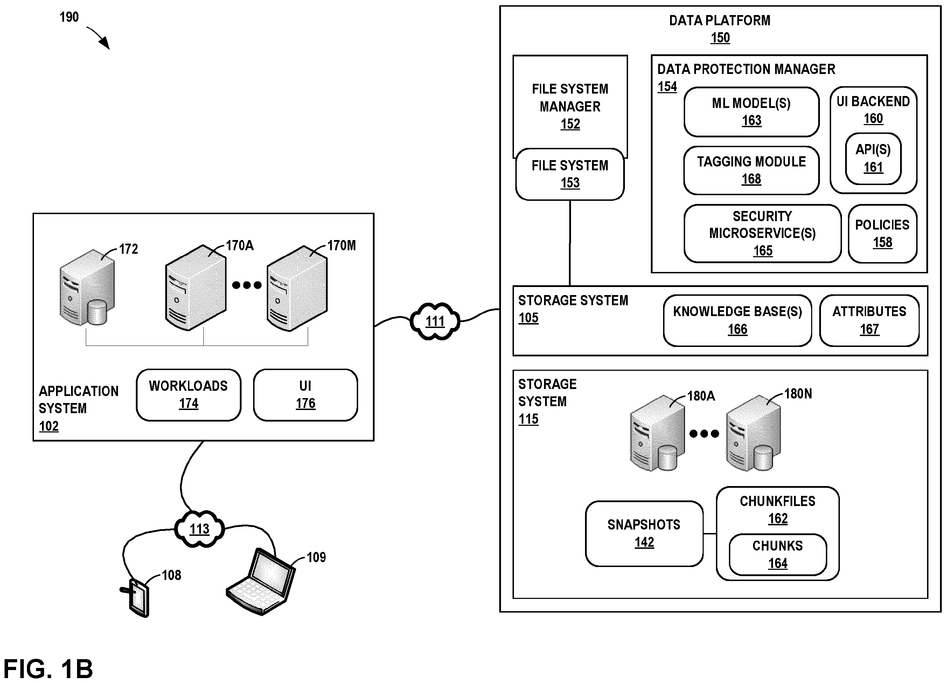

System 190 of FIG. 1B is a variation of system 100 of FIG. 1A in that data platform 150 stores snapshots 142 using chunkfiles 162 stored to snapshot storage system 115 that resides on premises or, in other words, local to data platform 150. In some examples of system 190, storage system 115 may enable users or applications to create, modify, or delete chunkfiles 162 via file system manager 152. In system 190, storage system 105 of FIG. 1B is the local storage system used by data protection manager 154 for initially storing and accumulating chunks prior to storage at storage system 115.

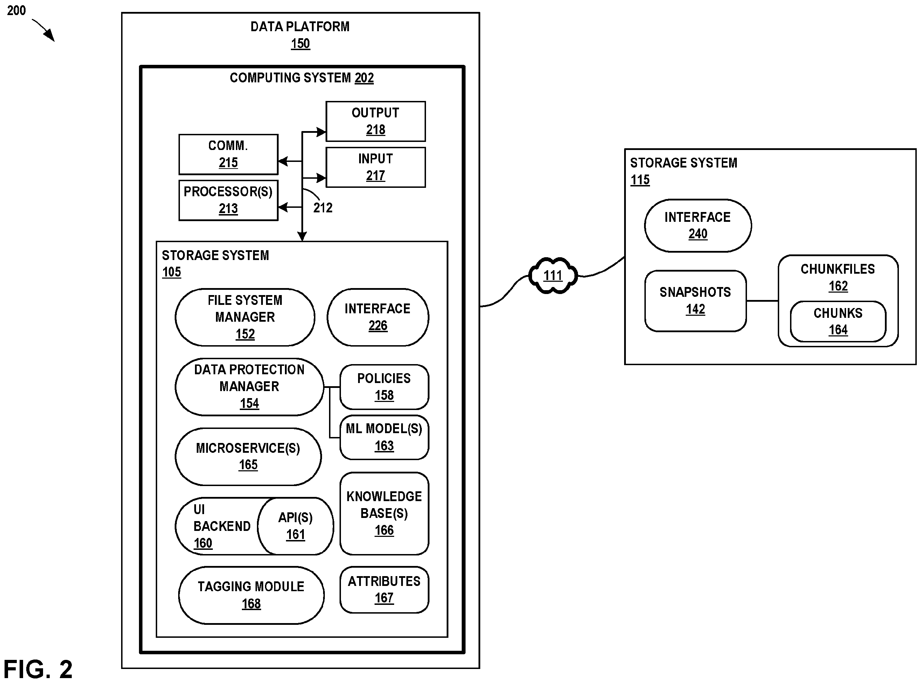

FIG. 2 is a block diagram illustrating example system 200, in accordance with techniques of this disclosure. System 200 of FIG. 2 may be described as an example or alternate implementation of system 100 of FIG. 1A or system 190 of FIG. 1B (where chunkfiles 162 are written to a local snapshot storage system 115). One or more aspects of FIG. 2 may be described herein within the context of FIG. 1A and FIG. 1B.

In the example of FIG. 2, system 200 includes network 111, data platform 150 implemented by computing system 202, and storage system 115. In FIG. 2, network 111, data platform 150, and storage system 115 may correspond to network 111, data platform 150, and storage system 115 of FIG. 1A. Although only one snapshot storage system 115 is depicted, data platform 150 may apply techniques in accordance with this disclosure using multiple instances of snapshot storage system 115. The different instances of storage system 115 may be deployed by different cloud storage providers, the same cloud storage provider, by an enterprise, or by other entities.

Computing system 202 may be implemented as any suitable computing system, such as one or more server computers, workstations, mainframes, appliances, cloud computing systems, and/or other computing systems that may be capable of performing operations and/or functions described in accordance with one or more examples of the present disclosure. In some examples, computing system 202 represents a cloud computing system, server farm, and/or server cluster (or portion thereof) that provides services to other devices or systems. In other examples, computing system 202 may represent or be implemented through one or more virtualized compute instances (e.g., virtual machines, containers) of a cloud computing system, server farm, data center, and/or server cluster.

In the example of FIG. 2, computing system 202 may include one or more communication units 215, one or more input devices 217, one or more output devices 218, and one or more storage devices of local storage system 105. Local storage system 105 may include interface module 226, file system manager 152, ML model(s) 163, and policies 158 as well as data protection manager 154, tagging module 168, and microservices 165. Local storage system 105 may also include knowledge base(s) 166 and attributes 167 as well as UI backend 160 and API(s) 161. One or more of the devices, modules, storage areas, or other components of computing system 202 may be interconnected to enable inter-component communications (physically, communicatively, and/or operatively). In some examples, such connectivity may be provided through communication channels (e.g., communication channels 212), which may represent one or more of a system bus, a network connection, an inter-process communication data structure, or any other method for communicating data.

The computing system 202 comprises processing means. In the example of FIG. 2, the processing means comprises one or more processors 213 configured to implement functionality and/or execute instructions associated with computing system 202 or associated with one or more modules illustrated in FIG. 2 and described below. One or more processors 213 may be, may be part of, and/or may include processing circuitry that performs operations in accordance with one or more examples of the present disclosure. Examples of processors 213 include microprocessors, application processors, display controllers, auxiliary processors, one or more sensor hubs, and any other hardware configured to function as a processor, a processing unit, or a processing device. Computing system 202 may use one or more processors 213 to perform operations in accordance with one or more examples of the present disclosure using software, hardware, firmware, or a mixture of hardware, software, and firmware residing in and/or executing at computing system 202.

One or more communication units 215 of computing system 202 may communicate with devices external to computing system 202 by transmitting and/or receiving data, and may operate, in some respects, as both an input device and an output device. In some examples, communication units 215 may communicate with other devices over a network. In other examples, communication units 215 may send and/or receive radio signals on a radio network such as a cellular radio network. In other examples, communication units 215 of computing system 202 may transmit and/or receive satellite signals on a satellite network. Examples of communication units 215 include a network interface card (e.g., such as an Ethernet card), an optical transceiver, a radio frequency transceiver, a GPS receiver, or any other type of device that can send and/or receive information. Other examples of communication units 215 may include devices capable of communicating over Bluetooth^{®}, GPS, NFC, ZigBee^{®}, and cellular networks (e.g., 3G, 4G, 5G), and Wi-Fi^{®} radios found in mobile devices as well as Universal Serial Bus (USB) controllers and the like. Such communications may adhere to, implement, or abide by appropriate protocols, including Transmission Control Protocol/Internet Protocol (TCP/IP), Ethernet, Bluetooth^{®}, NFC, or other technologies or protocols.

One or more input devices 217 may represent any input devices of computing system 202 not otherwise separately described herein. Input devices 217 may generate, receive, and/or process input. For example, one or more input devices 217 may generate or receive input from a network, a user input device, or any other type of device for detecting input from a human or machine.

One or more output devices 218 may represent any output devices of computing system 202 not otherwise separately described herein. Output devices 218 may generate, present, and/or process output. For example, one or more output devices 218 may generate, present, and/or process output in any form. Output devices 218 may include one or more USB interfaces, video and/or audio output interfaces, or any other type of device capable of generating tactile, audio, visual, video, electrical, or other output. Some devices may serve as both input and output devices. For example, a communication device may both send and receive data to and from other systems or devices over a network.

One or more storage devices of local storage system 105 within computing system 202 may store information for processing during operation of computing system 202, such as random access memory (RAM), Flash memory, solid-state disks (SSDs), hard disk drives (HDDs), etc. Storage devices may store program instructions and/or data associated with one or more of the modules described in accordance with one or more examples of this disclosure. One or more processors 213 and one or more storage devices may provide an operating environment or platform for such modules, which may be implemented as software, but may in some examples include any combination of hardware, firmware, and software. One or more processors 213 may execute instructions and one or more storage devices of storage system 105 may store instructions and/or data of one or more modules. The combination of processors 213 and local storage system 105 may retrieve, store, and/or execute the instructions and/or data of one or more applications, modules, or software. Processors 213 and/or storage devices of local storage system 105 may also be operably coupled to one or more other software and/or hardware components, including, but not limited to, one or more of the components of computing system 202 and/or one or more devices or systems illustrated as being connected to computing system 202.

File system manager 152 may perform functions relating to providing file system 153, as described above with respect to FIG. 1A. File system manager 152 may generate and manage file system metadata for structuring file system data for file system 153, and store file system metadata and file system data to local storage system 105. File system metadata may include one or more trees that describe objects within file system 153 and the file system 153 hierarchy, and can be used to write or retrieve objects within file system 153. File system manager 152 may interact with and/or operate in conjunction with one or more modules of computing system 202, including interface module 226 and data protection manager 154.

Data protection manager 154 may perform functions relating to performing various aspects of an actionable artificial intelligence bot based on data security correlations, as described above with respect to FIG. 1A, including operations described above with respect to ML models 163, such as data security model 163 and LLM 163 described above, UI backend 160, tagging module 168 and microservices 165. Data protection manager 154 may cause storage system 105 to store, retrieve, and update knowledge bases 166 and attributes 167. For example, data protection manager 154 may cause storage system 105 to store, retrieve, and update knowledge bases 166 and/or attributes 167 during training of and inferencing by ML models 163

Data protection manager 154 may generate one or more snapshots 142 and cause file system data 230 to be stored as tree data 120 and chunks 164 within chunkfiles 162 in snapshot storage system 115. Data protection manager 154 may apply a deduplication process to selectively deduplicate chunks of objects within file system data 230, in accordance with one or more policies 158. Data protection manager 154 may generate and manage tree data 120 for generating, viewing, retrieving, or restoring any of snapshots 142. Data protection manager 154 may generate and manage file system metadata for generating, viewing, retrieving, or restoring objects stored as chunks 164 (and references thereto) within chunkfiles 162, for any of snapshots 142. Stored objects may be represented and manipulated using logical files for identifying chunks for the objects.

Local storage system 105 may store a chunk table that describes chunks 164. The chunk table may include respective chunk IDs for chunks 164 and may contain pointers to chunkfiles 162 and offsets within chunkfiles 162 for retrieving chunks 164 from storage system 115. Chunks 164 are written into chunkfiles 162 at different offsets. By comparing new chunk IDs to the chunk table, data protection manager 154 can determine if the data already exists on the system. If the chunks already exist, data can be discarded and metadata for an object may be updated to reference the existing chunk. Data protection manager 154 may use the chunk table to look up the chunkfile identifier for the chunkfile that contains a chunk.

Local storage system 105 may include a chunkfile table that describes respective physical or virtual locations of chunkfiles 162 on storage system 115, along with other metadata about the chunkfile, such as a checksum, encryption data, compression data, etc. In FIG. 2, data protection manager 154 causes file system metadata to be stored to local storage system 105. In some examples, data protection manager 154 causes some or all of file system metadata to be stored to snapshot storage system 115. Data protection manager 154, optionally or in conjunction with file system manager 152, may use file system metadata to restore any of snapshots 142 to a file system implemented by data platform 150, which may be presented by file system manager 152 to other systems.

Interface module 226 may execute an interface by which other systems or devices may determine operations of file system manager 152 or data protection manager 154. Another system or device may communicate via an interface of interface module 226 to specify one or more policies 158.

System 200 may be modified to implement an example of system 190 of FIG. 1B. In the modified system 200, chunkfiles 162 are stored to a local snapshot storage system 115 to support snapshots 142.

Interface module 240 of snapshot storage system 115 may execute an interface by which other systems or devices may create, modify, delete, or extend a "write once read many" (WORM) lock expiration time for any of chunkfiles 162. Interface module 240 may execute and present an API. The interface presented by interface module 240 may be a gRPC, HTTP, RESTful, command-line, graphical user, web, or other interface. Interface module 240 may be associated with use costs. One more methods or functions of the interface module 240 may impose a cost per-use (e.g., $0.10 to extend a WORM lock expiration time of chunkfiles 162).

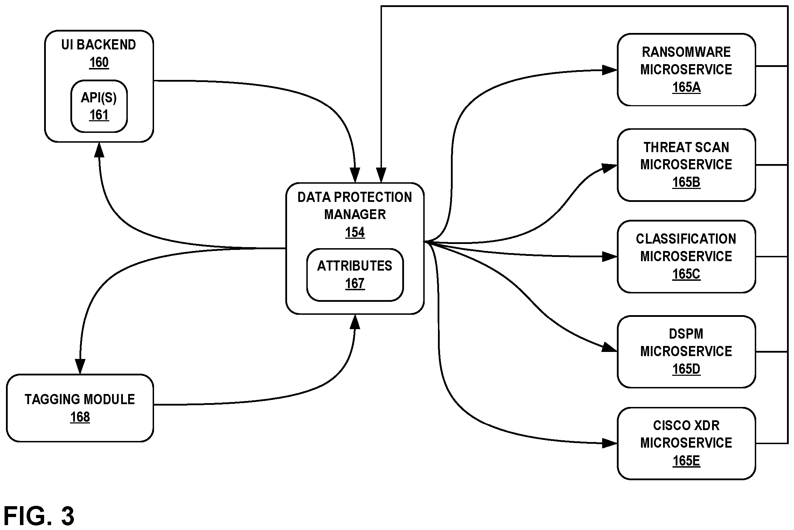

FIG. 3 is a block diagram illustrating an example system configured to support execution of an actionable artificial intelligence bot based on data security correlations, in accordance with various techniques of this disclosure. Various aspects of FIG. 3 are described below in the context of FIGS 1A-1B. The example of FIG. 3 includes some examples of microservices 165, namely, a ransomware microservice 165A, threat scan microservice 165B, classification microservice 165C, DSPM microservice 165D, and CISCO^{®} XDR microservice 165E. As described above, microservices 165 may monitor user or other activity at workloads (e.g., snapshot 142), scan workloads, and/or output security analyses (e.g., attributes 167 for a security breach, potential security breach, or compromise). As such, in some examples, ransomware microservice 165A may output attributes 167 indicating ransomware has been detected, threat scan microservice 165B may output attributes 167 indicating a threat (e.g., virus or malware) has been detected, classification microservice 165C may output attributes 167 indicating a classification of one or more objects in a snapshot 142 (e.g., public data, private data, sensitive data, confidential data), and DSPM microservice 165D may output attributes 167 including a DSPM evaluation. DSPM microservice 165D may output attributes 167 similar to those of other microservices 165, including identifications of ransomware, threats, and data classifications. In some examples, DSPM microservice 165D or other microservice 165 may output attributes 167 including indications of device misconfigurations, privilege escalation, unauthorized or undesired access, abnormal access patterns, and other attributes 167 relating to a security breach or compromise. CISCO^{®} XDR microservice 165E may be an example of DSPM microservice 165D. Microservices 165, such as CISCO^{®} XDR microservice 165E, DSPM microservice 165D, or both, may provide suggested responses to security issues the particular microservice 165 is configured to find.

In the example of FIG. 3, the arrows illustrate example data flows between elements of data platform 150. As can be seen, data protection manager 154 may send instructions or requests to microservices 165 instructing a respective microservice 165 to perform a particular function. Data protection manager 154 may receive messages from microservices 165 which may include one or more attributes 167 of a security breach. Microservices 165 may send messages in response to a request from data protection manager 154 or when triggered by a scan, monitoring, or other activity performed by microservices 165.

For example, data protection manager 154 may send a request to threat scan microservice 165B to perform a threat scan (e.g., virus/malware scan) of snapshots 142. In response, threat scan microservice 165B may send to data protection manager 154 a message including one or more attributes 167 indicating any threats revealed by the threat scan or indicating no threats were found by threat scan. Microservices 165 may also perform continuous monitoring of snapshots 142. As such, for example, in response to detecting ransomware as the result of continuous monitoring, ransomware microservice 165A may send a message with attributes 167 indicating the type or other characteristic of the ransomware to data protection manager 154 without first receiving a request from data protection manager 154.

In some examples, each microservice 165 may perform a particular type of scanning or monitoring of snapshots 142 and output attributes 167 relating to the particular type of scanning or monitoring that differ from the attributes 167 other microservices 165 produce (e.g., output). For example, ransomware microservice 165A may scan/monitor for ransomware and output attributes 167 relating to ransomware detection, threat scan microservice 165B may scan/monitor for threats and output attributes 167 relating to threat detection, classification microservice 165C may scan/monitor for classifications of security issues (e.g., security breach, threat, misconfiguration) and output attributes 167 relating to the classifications of security issues, and so on.

In operation, data security model 163 of data protection manager 154 may select a subset of microservices 165 to provide relevant security data (e.g., attributes 167) for a particular security breach or compromise. For example, ML model(s) 163, having been trained on various knowledge bases 166, may identify a subset of microservices 165 from which attributes 167 may be obtained, in order to improve detection of an indication of a security breach and / or compromise when those attributes are processed.

In some examples, when data protection manager 154 is unable to come to a definitive conclusion to confirm a security breach has occurred (e.g., confirm snapshot 142 has been compromised), data security model may select one or more of microservices 165 that may have additional relevant information to potentially confirm the security breach. ML model(s) 163 may, based on a current confidence level that a snapshot is compromised, as well as the microservices 165 that have already been used to determine the current confidence level, identify a further subset of microservices 165 from which further attributes 167 may be obtained and processed to improve the confidence level. The ML model(s) 163 may have been trained on various knowledge bases 166 such that the ML model(s) 163 may be capable of selecting the further subset in an efficient and non-trivial manner. In this way, the further subset of microservices may provide additional attributes that, when processed by the ML model(s) 163, increase the confidence level that a snapshot is compromised, perhaps above a threshold confidence level.

In any case, data protection manager 154 may request attributes 167 from the selected microservices 165 and process, such as with data security model 163, the newly requested attributes 167 and/or any existing attributes 167 to confirm the security breach.

In some examples, data protection manager 154 may utilize one or more tags from tagging module 168 in determining or confirming a security breach. As described above, tagging module 168 may assign one or more tags to various portions (e.g., objects) of snapshots 142. Tags may provide additional information regarding characteristics of such objects, including the presence of indicators of compromise, indications of sensitive data, and DSPM vendor evaluations. Tagging module 168 may continuously monitor snapshots 142 as snapshots 142 are created, updated, or modified, such as at storage system 115, and may continuously assign or update tags to objects (e.g., files) within snapshots 142. As such, data protection manager 154 may determine a security breach based on one or more tags (e.g., an indicator of compromise tag) assigned by tagging module 168. In some examples, tags may be stored on storage system 115, storage system 105, or both.

As shown by the arrows between tagging module 168 and data protection manager 154, data protection manager 154 may send instructions or requests to tagging module 168 instructing tagging module 168 to perform a particular function. Data protection manager 154 may receive messages from tagging module 168 which may include indications of one or more tags. Data protection manager 154 may store an indication of the one or more tags along with an indication of the relevant object or portion of snapshots 142, such as at storage system 105. In this manner, data protection manager 154 may assign the one or more tags to the object or portion of snapshots 142. In some examples, data protection manager 154 may receive a message or indication of a security breach from tagging module 168, such as in the form of a tag including an indicator of compromise. Though shown as separate from microservices 165, in some examples, tagging module 168 may be implemented as a microservice, such as a tagging microservice of microservices 165.

Data protection manager 154 and UI backend 160 may operate in conjunction, as shown by the arrows therebetween in the example of FIG. 3, to interact with a user. As described above, the user may interact with data protection manager 154 through UI 176 using natural language (e.g., voice-to-text, text chat messages, etc.) to enter queries, commands, and other input, which data protection manager 154, such as using LLM 163, may process to derive intents. Based on the intents, data protection manager 154 may perform one or more security responses or retrieve security data from one or more knowledge bases 166. For example, LLM 163 may derive an intent indicating a user's authorization or confirmation, or lack thereof, to respectively proceed with or refrain from performing a security response suggested by data platform 154. Data protection manager 154 may invoke LLM 163, providing derived intents, monitored actions, security analysis outputs (e.g., attributes 167) from microservices 165, the security data retrieved from one or more knowledge bases 166. Data protection manager 154, through LLM, may formulate, based on such input, a natural language response and send the natural language response to UI backend 160. For example, data protection manager 154 may generate a natural language response indicating whether the security response was executed and describing any results of the security response in natural language. UI backend 160 may output the natural language response to UI 176 executed locally at the remote end user system (shown as application system 102 in FIGS. 1A-1B).

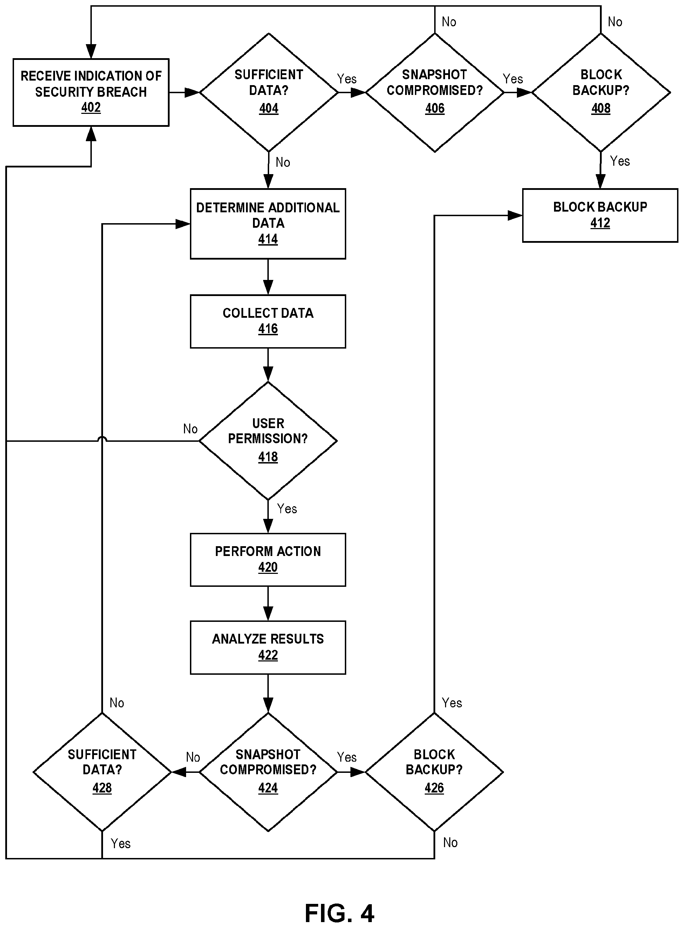

FIG. 4 is a flowchart illustrating example operation of a data platform in performing various aspects of an actionable artificial intelligence bot based on data security correlations, in accordance with various techniques of this disclosure. Some aspects of FIG. 4 are described below in the context of FIGS. 1A-1B. Data platform 150, such as at data protection manager 154, may receive an indication of a security breach (402). For example, data protection manager 154 may receive an indication of a security breach from microservices 165, tagging module 163, or both. For instance, ransomware microservice 165A, as shown in the example of FIG. 3, may detect a potential ransomware security breach in one or more snapshots 142 and send one or more attributes of the security breach to data protection manager 154, or tagging module 163 may tag one or more objects in snapshots 142 with an indicator of compromise and send the tag to data protection manager 154.

Data protection manager 154 may determine whether data protection manager has sufficient data (e.g., attributes of the security breach) (404), such as to confirm the security breach. As described above, security breaches or compromises of snapshots 142 may include unauthorized or undesired access, changes, deletion, encryption, or exfiltration of at least a portion of snapshots 142. In some examples, data protection manager 154 may determine sufficient data is available when ML model 163 can confirm at least to a threshold confidence level (e.g., 90%) that snapshot 142 is compromised, and determine sufficient data does not exist when ML model 163 cannot confirm that snapshot 142 is compromised to the threshold confidence level (e.g., less than 90%). When sufficient data is available, data protection manager 154 may determine whether snapshot 142 is compromised (406). For example, ML model 163 may confirm to the threshold confidence level (e.g., 90%) that snapshot 142 is compromised. When data protection manager 154 does not determine snapshot 142 is compromised data protection manager 154 may, in some examples, take no action and continue to await or monitor for indications of security breaches such as at step 402.

When data protection manager 154 determines snapshot 142 is compromised, data protection manager 154 may proceed to possibly perform a security response. In some examples, data protection manager 154 may determine whether to perform a security response in the form of blocking (e.g., stopping or preventing) an incremental backup of snapshot 142 (408). Data protection manager 154 may determine whether to perform a security response based on various criteria and user permission. For example, data protection manager 154 may present an actionable prompt, such as through UI 176 and UI backend 160, suggesting one or more security responses when the confidence level of the compromise of snapshot 142 is above a threshold confidence level (e.g., 90%) and/or when the compromised objects of snapshot 142 include sensitive or confidential data. When data protection manager 154 receives user input indicating user permission, such as through UI 176 and UI backend 160, to perform a security response, data protection manager 154 may perform the security response, such as in the form of blocking an incremental backup of snapshot 142 (412) as shown in the example of FIG. 4. When data protection manager 154 does not determine to perform a security response, such as when data protection manager 154 does not receive user permission, data protection manager 154 may, in some examples, take no action and continue to await or monitor for indications of security breaches such as at step 402.

When data protection manager 154 has insufficient data (e.g., attributes of the security breach) to confirm the security breach to the threshold confidence level, data protection manager 154, such as through ML model 163, may determine additional data that may be used to improve the current confidence level (414). For example, with currently available attributes, ML model 163 may have a current confidence level (e.g., 80%) that snapshot 142 is compromised. The current confidence level may be less than the threshold confidence level (e.g., 90%). As such, ML model 163 may identify additional security data (e.g., attributes) that, when retrieved, may improve the current confidence level. Data protection manager 154 may collect additional security data (e.g., retrieve the identified attributes from microservices 165) in such case (416). Referring to FIG. 3 for example, data protection manager 154 may receive an indication of a security breach in the form of ransomware from ransomware microservice 165A and ML model 163 may identify attributes from threat scan microservice 165B as being capable of improving the current confidence level (e.g., 70%) that snapshot 142 has been compromised by ransomware. Upon retrieving attributes of the security breach (e.g., ransomware) from threat scan microservice 165B, the combination of attributes from ransomware microservice 165A and threat scan microservice 165B may be processed by data protection manager 154, using ML model 163, to improve the current confidence level possibly to meet the threshold confidence level (e.g., 90%).

Generally, the ML model 163 may be trained to identify one or more further microservices from which to obtain attributes in order to increase the current confidence level that a snapshot is compromised. The ML model 163 may be trained in any suitable way to do this. For example, the ML model 163 maybe at least partially trained based on training data comprising a first set of attributes generated by a first subset of microservices and a second set of attributes generated by a second subset of microservices. The ML model 163 may identify the second set of attributes based on a confidence level determined by processing the first set of attributes. The second set of attributes from the second subset of microservices may be processed (along with the first set of attributes) and the determined confidence level and used to update parameters of the ML model 163 using any known suitable technique.

Data protection manager 154 may, such as through ML model 163, obtain user permission prior to performing a security response (418). For example, data protection manager 154 may present, in natural language generated by ML model 163 based on input such as attributes of the security breach, knowledge base(s) 166, or both, an actionable prompt including one or more suggested security responses. The actionable prompt may be sent from UI backend 160 to UI 176 and UI 176 may present the actionable prompt to the user. In some examples, the actionable prompt may indicate to the user that the user's confirmation or authorization is required before data protection manager 154 may perform the suggested security responses.

The user may input their response indicating their permission or lack thereof (e.g., "yes" or "no") in natural language at UI 176. Data protection manager 154 may receive the user's input from UI 176 and UI backend 160, which may include deriving the user's intent (e.g., permission or lack thereof) from the user's input, such as through ML model 163. When the user input does not indicate their permission is given, data protection manager 154 may take no action and continue to await or monitor for indications of security breaches such as at step 402.

When the user input indicates the user's permission has been given, data protection manager 154 may perform the action for which permission is given (420) (e.g., perform a security response authorized by the user). For example, upon receipt of the user's permission, data protection manager 154 may perform a threat scan through threat scan microservice 165B or a DSPM evaluation through DSPM microservice 165D, or other scan or analysis from another microservice of microservices 165. Data protection manager 154 may analyze the results of the action (e.g., results of the security response(s)) (422), which may be in the form of attributes generated by microservices 165 that performed the security response(s). In some examples, data protection manager 154 may present, in natural language, through ML model 163 and UI 176, a summary or description of the analysis to the user and the user may interact with data protection manager 154, such as by inputting natural language queries at UI 176 to obtain additional information from data protection manager 154 and ML model 163 regarding the analysis. Data protection manager 154 may respond to the queries through ML model 163 in natural language and the user may utilize the natural language responses to aid in determining their next action, such as in determining whether to permit a suggested security response by data protection manager 154.

When sufficient data (e.g., sufficient attributes) is available, data protection manager 154 may determine whether snapshot 142 is compromised (424). Data protection manager 154 may make the determination of whether snapshot 142 is compromised based on any previously retrieved information, including attributes, such as attributes retrieved at step 420, as well as results of the analysis of the attributes conducted at step 422. In some examples, data from the analysis may be in the form of attributes for the security breach, which ML model 163 may use to determine whether snapshot 142 is compromised. When data protection manager 154 determines snapshot 142 is compromised, data protection manager 154 may proceed to possibly perform a security response. For example, data protection manager 154 may determine whether to perform a security response in the form of blocking an incremental backup of snapshot 142 (426), such as described above with respect to step 408. For instance, data protection manager 154 may determine whether to perform the security response based on whether user input is received, such as via UI 176 and UI backend 160, including the user's permission to perform the security response.

Data protection manager 154 may determine whether to perform a security response based on various criteria and user permission. For example, data protection manager 154 may present an actionable prompt, such as through UI 176 and UI backend 160, suggesting one or more security responses when the confidence level of the compromise of snapshot 142 is above a threshold confidence level (e.g., 90%) and/or when the compromised objects of snapshot 142 include sensitive or confidential data. When data protection manager 154 receives user input, such as through UI 176 and UI backend 160, indicating user permission to perform a security response, data protection manager 154 may perform the security response, such as in the form of blocking an incremental backup of snapshot 142 (412). When data protection manager 154 does not determine to perform a security response, such as when data protection manager 154 does not receive user permission, data protection manager 154 may, in some examples, take no action and continue to await or monitor for indications of security breaches such as at step 402.

In some cases, data protection manager 154 may be unable to determine snapshot 142 has been compromised. For example, data protection manager 154 may have insufficient data (e.g., insufficient attributes of the security breach) for ML model 163 to determine to a threshold confidence level (e.g., 90%) that snapshot 142 has been compromised. When data protection manager 154 does not determine snapshot 142 is compromised, data protection manager 154 may determine whether sufficient data exists to determine snapshot 142 has been compromised (428). For example, data protection manager 154, through ML model 163, may determine all available sources of security data (e.g., attributes) have been exhausted. Such data source exhaustion may occur, for example, if all attributes for the security breach have been retrieved from microservices 165. For example, data protection manager 154 may have retrieved attributes from every relevant or all microservices 165 and, as such, ML model 163 may have no more security data (e.g., attributes) available to improve confidence in the determination of whether snapshot 142 has been compromised.

When data protection manager 154 determines the existing data (e.g., attributes of the security breach) to be insufficient (e.g., other microservices 165 may have attributes relevant to the security breach), data protection manager 154 may obtain additional data (e.g., attributes) that may be used to improve the current confidence level, such as described above with respect to steps 414-422. When data protection manager 154 determines sufficient data exits, data platform may, in some examples, take no action and continue to await or monitor for indications of security breaches such as at step 402.

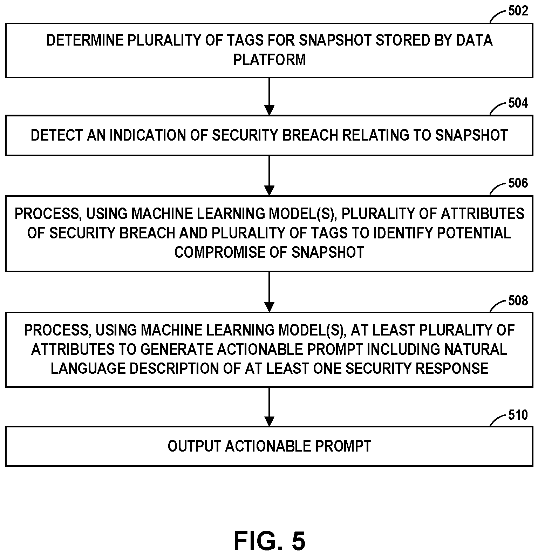

FIG. 5 is a flowchart illustrating example operation of a data platform in performing various aspects of an actionable artificial intelligence bot based on data security correlations, in accordance with various techniques of this disclosure. Some aspects of FIG. 5 may be described in the context of FIGS 1A-1B. Data platform 150, such as through tagging module 168, may determine a plurality of tags for a snapshot 142 stored by the data platform (502). Tagging module 168 may categorize snapshots 142 with one or more tags, such as by assigning one or more tags to snapshots 142 or various portions (e.g., objects) of snapshots 142. The tags may comprise one or more of an indication of compromise of the snapshot, an indication of sensitive data in the snapshot, or a DSPM evaluation. The tags may, when processed by data protection manager 154, such as using one or more ML models 163, provide with a preliminary overview of snapshots 142, enabling data protection manager 154 to make informed decisions (e.g., derive intents, determine/confirm compromise of a snapshot/workload, suggest security responses, or execute security responses) promptly.

Data platform 150 may detect an indication of a security breach relating to the snapshot (504). For example, data protection manager 154 may receive an indication of a security breach from microservices 165, tagging module 163, or both. As described above for instance, ransomware microservice 165A, as shown in the example of FIG. 3, may detect a potential ransomware security breach in one or more snapshots 142 and send one or more attributes for the security breach to data protection manager 154, or tagging module 163 may tag one or more objects in snapshots 142 with an indicator of compromise which may be received by data protection manager 154.

Data platform 150 may process, using one or more ML models 163, a plurality of attributes of the security breach and the plurality of tags to identify a potential compromise of the snapshot (506). Processing, by data platform 150 the plurality of attributes of the security breach and the plurality of tags to identify the potential compromise of the snapshot may, in some examples include data platform 150 determining, using ML model 163, an intent to compromise the snapshot based on the plurality of attributes and the plurality of tags. Data platform 150 may determine, such as through ML model 163, a confidence level or indicator for the potential compromise of snapshot 142. In response to determining that the confidence indicator is below a threshold confidence level (e.g., 90%), data platform 150 may select, based on the potential compromise, a microservice from a plurality of microservices 165, and add, or append, security data from the selected microservice to the plurality of attributes. As described above, data platform 150 may, in this manner, collect additional data (e.g., additional attributes), such as to allow data platform to confirm the security breach by confirming snapshot 142 has been compromised. In some examples, microservices 165 may be one or more of a ransomware detection microservice, a threat scan microservice, a data classification microservice, or a data security posture management (DSPM) microservice.

Data platform 150 may process, such as using one or more ML models 163, at least the plurality of attributes to generate an actionable prompt including a natural language description of at least one security response (508). Data platform 150 may output the actionable prompt (510). For example, to output the actionable prompt, data platform 150 may, such as through UI backend 160, send the actionable prompt to UI 176. UI 176 may present the actionable prompt to a user. As described above, UI 176 may present output to the user and receive input from the user in an interactive manner using natural language through ML model 163. In some examples, ML model 163 may be a single model (e.g., an LLM) or may be a plurality of distinct ML models 163 which may be utilized on conjunction to provide an actionable artificial intelligence bot based on data security correlations, in accordance with the techniques described herein.

The actionable prompt assists the user in performing the technical task of improving security of the data platform 150. In particular, cognitive content provided by the actionable prompt relates to an internal state of the data platform 150 and enables the user to properly operate the data platform 150. The presentation of the actionable prompt prompts the user to interact with the data platform 150 to perform a security response. The assistance to the user in performing the security response is objectively, reliably and causally linked to the actionable prompt.

Data platform 150 may receive, such as through UI backend 160 and from the user, a response to the actionable prompt. For example, data platform 150 may receive a response indicating the user's permission to proceed with at least one security response. Data platform 150 may perform the security response based on the response. For example, when data platform 150 receives a response indicating the user has given their permission, data platform 150 may perform the security response. When data platform 150 receives a response indicating the user has not given their permission, data platform 150 may refrain from performing the security response. As described above, data platform 150 may perform various security responses including blocking an incremental or other backup of snapshot 142, retrieving additional attributes for the security breach from microservices 165, or performing analyses of available and newly retrieved attributes for the security breach. In some examples, data platform 150 may train ML model 163 through reinforcement learning with a data set including at least a security knowledgebase 166 and the response to the actionable prompt, where the response to the actionable prompt may be used to learn and improve behavior (e.g., suggested security responses) of ML model 163.

Although the techniques described in this disclosure are primarily described with respect to a backup or snapshot function performed by a data protection manager of a data platform, similar techniques may additionally or alternatively be applied for an archive, replica, or clone function performed by the data platform. In such cases, snapshots 142 would be archives, replicas, or clones, respectively.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

The detailed description set forth herein, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

In accordance with one or more aspects of this disclosure, the term "or" may be interrupted as "and/or" where context does not dictate otherwise. Additionally, while phrases such as "one or more" or "at least one" or the like may have been used in some instances but not others; those instances where such language was not used may be interpreted to have such a meaning implied where context does not dictate otherwise.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structure or any other structure suitable for implementation of the techniques described. In addition, in some examples, the functionality described may be provided within dedicated hardware and/or software modules. Also, the techniques could be fully implemented in one or more circuits or logic elements.

Processing means, as used herein, may comprise processing circuitry as has been described above. In some examples, the processing means may comprise at least one processor and at least one memory with computer code comprising a set of instructions, which, when executed by the at least one processor, causes the at least one processor to perform any of the functions described herein. In some examples, the processing means may receive computer code comprising the set of instructions from at least one memory coupled to the processing means.

The techniques of this disclosure may be implemented in a wide variety of devices or apparatuses, including a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

### Additional Details

The present disclosure enables at least the following example process. The process may be performed by a data platform implemented by a computing system. The data platform determines a plurality of tags for a snapshot. The tags can include metadata associated with the snapshot, such as timestamps, user identifiers, access patterns, or other identifying information related to the snapshot execution.

The data platform determines a plurality of attributes of a security breach relating to the snapshot. The attributes can include characteristics or indicators of potential security compromises, such as unusual access patterns, unexpected modifications, or deviations from typical snapshot behaviors. The plurality of tags and the plurality of attributes together provide an indication of the security breach relating to the snapshot.

The data platform processes the plurality of attributes of the security breach and the plurality of tags using one or more machine learning models to identify a potential compromise of the snapshot. The machine learning models can analyze patterns, correlations, and relationships between the attributes and tags to detect anomalies and / or indicators of compromise.

The data platform processes at least the plurality of attributes using the machine learning models to generate an actionable prompt. The actionable prompt includes a natural language description of at least one security response. The security response can include recommended actions, mitigation steps, or protective measures to address the identified potential compromise.

The data platform outputs the actionable prompt. The output can be provided through various interfaces or communication channels, such as display screens, messaging systems, or notification mechanisms. The natural language description in the actionable prompt enables users to understand and implement appropriate security responses based on the identified potential compromise.

The machine learning models used can include various types of models such as neural networks, decision trees, random forests, or other suitable algorithms that may be trained on historical security breach data. The models can be continuously updated and refined based on new security breach instances and outcomes.

The data platform's combination of tag analysis with machine learning models may enable continuous monitoring and detection of snapshot compromises without requiring manual security reviews. The automated analysis can process large volumes of snapshot data and security attributes in real-time. This automated approach helps identify potential security issues that may be difficult to detect through conventional manual inspection methods.

The natural language description of security responses may allow users with varying technical backgrounds to understand and implement appropriate security measures. The actionable prompts translate complex security analysis results into clear, understandable instructions. Users can quickly comprehend the security situation and take necessary actions without requiring specialized security expertise.

In some examples, the plurality of attributes is a first plurality of attributes associated with a security breach. The processing of the first plurality of attributes and tags may generate a first confidence indicator for a potential compromise of a snapshot. The data platform may evaluate whether the first confidence indicator falls below a threshold confidence level. If the first confidence indicator is below the threshold confidence level, additional processing may be performed to enhance the confidence assessment.

When the first confidence indicator is below the threshold, the data platform may select a security microservice from a plurality of security microservices based on characteristics of the potential compromise. The selected security microservice may provide additional security information that is appended to the first plurality of attributes to form a second plurality of attributes.

The data platform may then process the second plurality of attributes along with the plurality of tags using the one or more machine learning models. This secondary processing may enable the determination of a second confidence indicator for the potential compromise. The second confidence indicator may provide a more accurate assessment of the potential compromise by incorporating the additional security information obtained from the security microservice.

The security microservices can include various specialized services that analyze different aspects of security breaches. The threshold confidence level can be configured based on security policies, risk tolerance levels, or organizational requirements. The machine learning models may be trained using historical security breach data and can be updated periodically to improve their accuracy in identifying potential compromises.

The use of additional security microservices to supplement the initial analysis may enable more precise detection of compromises. When confidence levels are low, incorporating specialized security information from relevant microservices may provide additional context for the machine learning assessment. The combination of initial attribute processing with targeted microservice data may allow for refined evaluation of potential security threats.

In some examples, one or more microservices may have been used to determine the first plurality of attributes. The microservice selected to generate the security information appended to the first plurality of attributes may be determined based on the first confidence indicator and the one or more microservices used to determine the first plurality of attributes.

This machine learning-based approach may enable dynamic selection of security microservices through intelligent analysis of confidence indicators and attribute data. The data platform may adapt its microservice selection based on the reliability of previously determined attributes and the specific microservices involved in the analysis process. This automated selection mechanism may help to optimize the analysis workflow by identifying and deploying the most suitable security microservice for each specific scenario.

In some examples, the one or more machine learning models may determine whether specific attributes of the microservices can improve a first confidence level. When attributes that can improve the first confidence level are identified, the associated microservice may be selected.

The machine learning model(s) may continuously learn and adapt based on the outcomes of previous selections, refining their ability to identify beneficial attributes and improve the selection process over time. The analysis of attributes and their potential impact on confidence levels can be performed using various machine learning techniques, such as pattern recognition, statistical analysis, or neural networks.

The identification of specific attributes that can enhance confidence levels enables precise allocation of security analysis resources. By pinpointing particular characteristics that contribute to improved confidence, the system can focus computational and analytical efforts where they will have the most impact. This targeted approach can reduce unnecessary processing overhead while maximizing the effectiveness of security assessments.

Aspects of this disclosure include the following examples.

Example 1: A method includes determining, by a data platform implemented by a computing system, a plurality of tags for a snapshot executed by the data platform; detecting, by the data platform, an indication of a security breach relating to the snapshot; processing, by the data platform and using one or more machine learning models, a plurality of attributes of the security breach and the plurality of tags to identify a potential compromise of the snapshot; processing, by the data platform and using the one or more machine learning models, at least the plurality of attributes to generate an actionable prompt including a natural language description of at least one security response; and outputting, by the data platform, the actionable prompt.

Example 2: The method of example 1, further includes receiving, by the data platform and from a user, a response to the actionable prompt; and performing, by the data platform, the at least one security response based on the response.

Example 3: The method of example 2, wherein the at least one security response includes blocking a backup of the snapshot.

Example 4: The method of example 2, further comprising training, by the data platform, the one or more machine learning models with a data set including at least a security knowledgebase and the response to the actionable prompt.

Example 5: The method of example 1, further includes determining, by the data platform, a confidence indicator for the potential compromise; responsive to determining the confidence indicator is below a threshold confidence level, selecting, by the data platform and based on the potential compromise, a security microservice from a plurality of security microservices; and including, by the data platform, security information from the security microservice in the plurality of attributes.

Example 6: The method of example 4, wherein the plurality of security microservices are one or more of: a ransomware detection microservice, a threat scan microservice, a data classification microservice, or a data security posture management (DSPM) microservice.

Example 7: The method of example 1, wherein the plurality of tags are one or more of: an indication of compromise of the snapshot, an indication of sensitive data in the snapshot, or a data security posture management (DSPM) evaluation.

Example 8: The method of example 1, wherein processing the plurality of attributes of the security breach and the plurality of tags to identify the potential compromise of the snapshot comprises determining, by the data platform and using the machine learning model, an intent to compromise the snapshot based on the plurality of attributes and the plurality of tags.

Example 9: A computing system includes a memory storing instructions; and processing circuitry that executes the instructions to: determine a plurality of tags for a snapshot executed by the data platform; detect an indication of a security breach relating to the snapshot; process, using one or more machine learning models, a plurality of attributes of the security breach and the plurality of tags to identify a potential compromise of the snapshot; process, using the one or more machine learning models, at least the plurality of attributes to generate an actionable prompt including a natural language description of at least one security response; and output the actionable prompt.

Example 10: The computing system of example 9, wherein the processing circuitry executes the instructions to: receive, from a user, a response to the actionable prompt; and perform the at least one security response based on the response.

Example 11: The computing system of example 10, wherein the at least one security response includes blocking a backup of the snapshot.

Example 12: The computing system of example 10, the processing circuitry executes the instructions to train the one or more machine learning models with a data set including at least a security knowledgebase and the response to the actionable prompt.

Example 13: The computing system of example 9, the processing circuitry executes the instructions to: determine a confidence indicator for the potential compromise; responsive to determining the confidence indicator is below a threshold confidence level, select, based on the potential compromise, a security microservice from a plurality of security microservices; and include security information from the security microservice in the plurality of attributes.

Example 14: The computing system of example 13, wherein the plurality of security microservices are one or more of: a ransomware detection microservice, a threat scan microservice, a data classification microservice, or a data security posture management (DSPM) microservice.

Example 15: The computing system of example 9, wherein the plurality of tags are one or more of: an indication of compromise of the snapshot, an indication of sensitive data in the snapshot, or a data security posture management (DSPM) evaluation.

Example 16: The computing system of example 9, wherein to process the plurality of attributes of the security breach and the plurality of tags to identify the potential compromise of the snapshot the processing circuitry executes the instructions to determine, using the one or more machine learning models, an intent to compromise the snapshot based on the plurality of attributes and the plurality of tags.

Example 17: Non-transitory computer-readable storage media comprising instructions that when executed, cause processing circuitry of a computing system to determine a plurality of tags for a snapshot executed by the data platform; detect an indication of a security breach relating to the snapshot; process, using one or more machine learning models, a plurality of attributes of the security breach and the plurality of tags to identify a potential compromise of the snapshot; process, using the one or more machine learning models, at least the plurality of attributes to generate an actionable prompt including a natural language description of at least one security response; and output the actionable prompt.

Example 18: The non-transitory computer-readable storage medium of example 17, wherein, when executed, the instructions cause the processing circuitry of the computing system to: receiving, by the data platform and from a user, a response to the actionable prompt; and performing, by the data platform, the at least one security response based on the response.

Example 19: The non-transitory computer-readable storage medium of example 17, wherein the at least one security response includes blocking a backup of the snapshot.

Example 20: The non-transitory computer-readable storage medium of example 17, wherein, when executed, the instructions cause the processing circuitry of the computing system to: determine a confidence indicator for the potential compromise; responsive to determining the confidence indicator is below a threshold confidence level, select, based on the potential compromise, a security microservice from a plurality of security microservices; and include security information from the security microservice in the plurality of attributes.

Various examples of the disclosure have been described. Any combination of the described systems, operations, or functions is contemplated.

## Claims

1. A method comprising:
determining, by a data platform implemented by a computing system, a plurality of tags for a snapshot executed by the data platform;
determining, by the data platform, a plurality of attributes of a security breach relating to the snapshot, wherein the plurality of tags and the plurality of attributes provide an indication of the security breach relating to the snapshot;
processing, by the data platform and using one or more machine learning models, the plurality of attributes of the security breach and the plurality of tags to identify a potential compromise of the snapshot;
processing, by the data platform and using the one or more machine learning models, at least the plurality of attributes to generate an actionable prompt including a natural language description of at least one security response; and
outputting, by the data platform, the actionable prompt.

2. The method of claim 1, further comprising:
receiving, by the data platform and from a user, a response to the actionable prompt; and
performing, by the data platform, the at least one security response based on the response.

3. The method of claim 1 or claim 2, wherein the at least one security response includes blocking a backup of the snapshot.

4. The method of claim 2, further comprising training, by the data platform, the one or more machine learning models with a data set including at least a security knowledgebase and the response to the actionable prompt.

5. The method of any preceding claim, wherein the plurality of attributes is a first plurality of attributes, and wherein processing the first plurality of attributes of the security breach and the plurality of tags to identify the potential compromise of the snapshot determines a first confidence indicator for the potential compromise, the method further comprising:
responsive to determining the first confidence indicator is below a threshold confidence level, selecting, by the data platform and based on the potential compromise, a security microservice from a plurality of security microservices;
appending, by the data platform, security information from the security microservice to the first plurality of attributes to form a second plurality of attributes; and
processing, by the data platform and using the one or more machine learning models, the second plurality of attributes of the security breach and the plurality of tags to determine a second confidence indicator for the potential compromise.

6. The method of claim 5, wherein the plurality of security microservices are one or more of:
a ransomware detection microservice, a threat scan microservice, a data classification microservice, or a data security posture management, DSPM, microservice.

7. The method of claim 5 or claim 6, wherein the security microservice is selected by the one or more machine learning models based on the first confidence indicator and one or more microservices used to determine the plurality of attributes.

8. The method of any of claims 5 to 7, wherein selecting the microservice comprises:
identifying, by the one or more machine learning models, one or more attribute from the microservice as being capable of improving the first confidence level.

9. The method of any preceding claim, wherein the plurality of tags are one or more of: an indication of compromise of the snapshot, an indication of sensitive data in the snapshot, or a data security posture management, DSPM, evaluation.

10. The method of any preceding claim, wherein processing the plurality of attributes of the security breach and the plurality of tags to identify the potential compromise of the snapshot comprises determining, by the data platform and using the machine learning model, an intent to compromise the snapshot based on the plurality of attributes and the plurality of tags.

11. A computing system comprising:
processing means configured to:
determine a plurality of tags for a snapshot executed by the data platform;
determine a plurality of attributes of a security breach relating to the snapshot, wherein the plurality of tags and the plurality of attributes provide an indication of the security breach relating to the snapshot;
process, using one or more machine learning models, the plurality of attributes of the security breach and the plurality of tags to identify a potential compromise of the snapshot;
process, using the one or more machine learning models, at least the plurality of attributes to generate an actionable prompt including a natural language description of at least one security response; and
output the actionable prompt.

12. The computing system of claim 11, wherein the processing means is further configured to:
receive, from a user, a response to the actionable prompt; and
perform the at least one security response based on the response.

13. The computing system of claim 11 or claim 12, the processing means is further configured to train the one or more machine learning models with a data set including at least a security knowledgebase and the response to the actionable prompt.

14. The computing system of any of claims 11 to 13, wherein the plurality of attributes is a first plurality of attributes, and wherein processing the first plurality of attributes of the security breach and the plurality of tags to identify the potential compromise of the snapshot determines a first confidence indicator for the potential compromise, the processing means further configured to:
responsive to determining the first confidence indicator is below a threshold confidence level, select, based on the potential compromise, a security microservice from a plurality of security microservices;
append security information from the security microservice to the first plurality of attributes to form a second plurality of attributes; and
process, using the one or more machine learning models, the second plurality of attributes of the security breach and the plurality of tags to determine a second confidence indicator for the potential compromise.

15. A computer-readable storage medium comprising instructions that, when executed, cause one or more processors of a computing system to perform the method of any of claims 1 to 10.
